(19) Europäisches Patentamt
European Patent Office
Office européen des brevets

(11) **EP 3 585 513 B1**

(12) **EUROPÄISCHE PATENTSCHRIFT**

(45) Veröffentlichungstag und Bekanntmachung des Hinweises auf die Patenterteilung:
**17.06.2020 Patentblatt 2020/25**

(21) Anmeldenummer: **17707510.8**

(22) Anmeldetag: **23.02.2017**

(51) Int Cl.:
**B01J 19/24** *(2006.01)* **B01J 19/26** *(2006.01)*
**B01J 4/00** *(2006.01)*

(86) Internationale Anmeldenummer:
**PCT/EP2017/054204**

(87) Internationale Veröffentlichungsnummer:
**WO 2018/153463 (30.08.2018 Gazette 2018/35)**

(54) **VERFAHREN UND VORRICHTUNG ZUR HYDROLYSE EINER VERBINDUNG**

METHOD AND DEVICE FOR THE HYDROLYSIS OF A COMPOUND

PROCÉDÉ ET DISPOSITIF D'HYDROLYSE D'UN COMPOSÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.01.2020 Patentblatt 2020/01**

(73) Patentinhaber: **Wacker Chemie AG**
**81737 München (DE)**

(72) Erfinder:
• **KLOSE, Göran**
**84323 Massing (DE)**
• **HOFMANN, Albert**
**94140 Ering (DE)**
• **MAIER, Helene**
**84489 Burghausen (DE)**

(74) Vertreter: **Belz, Ferdinand et al**
**Wacker Chemie AG**
**Hanns-Seidel-Platz 4**
**81737 München (DE)**

(56) Entgegenhaltungen:
**EP-A1- 1 892 458        EP-A1- 2 434 002**
**WO-A1-2009/037923    CN-A- 106 224 302**
**DE-C1- 19 725 955**

EP 3 585 513 B1

**Beschreibung**

Die Erfindung betrifft eine Vorrichtung sowie ein Verfahren zur Hydrolyse einer Verbindung.

Die beispielsweise bei der Herstellung von Polysilicium auftretenden Reaktionsprodukte enthalten in der Regel Wasserstoff, Chlorsilane und Chlorwasserstoff. Diese können insbesondere an feuchter Luft stark korrodierend wirken und darüber hinaus durch einen Anteil an polymeren Siliciumchlorwasserstoffverbindungen selbstentzündlich sein. Die Abgase werden daher üblicherweise einer Aufarbeitung unterzogen, wobei gefährliche Komponenten abreagieren und in ungefährliche oder weniger gefährliche Komponenten überführt werden. Eine solche Aufarbeitung kann beispielsweise Hydrolyseschritte umfassen, bei welchen eine chemische Verbindung durch Reaktion mit Wasser gespalten wird. Chlorsilane können durch eine Behandlung mit Wasser beispielsweise unter Bildung ihrer Hydrolyseprodukte (z.B. $RSi(OH)_3$) abgeschieden und abgetrennt werden.

Insbesondere bei der Herstellung von Trichlorsilan (TCS), das für die Herstellung von Polysilicium als Ausgangsmaterial dient, aus Chlorwasserwasserstoff und metallurgischem Silicium bildet sich üblicherweise eine Fraktion von Chlorsiliciumverbindungen, deren Siedebereich grundsätzlich etwa zwischen 40 und 160°C liegt. Diese Fraktion, die in der Regel als Hochsieder oder Hochsiedergemisch bezeichnet wird, kann Chlor-Disilane, Chlor-Disiloxane, Metallchloride, Dotierstoffe sowie Tri- und Tetrachlorsilane umfassen. Da einige der genannten Verbindungen ähnliche Siedepunkte aufweisen können, ist eine destillative Trennung solcher Hochsieder generell mit einem großen Aufwand verbunden. Daher werden die Hochsieder von den übrigen Chlorsilanen abgetrennt und anschließend - üblicherweise mittels Hydrolyse - abreagiert.

Aus der DE 28 20 617 A1 ist beispielsweise ein Verfahren bekannt, bei dem die Hydrolyse eines Hochsiedergemischs in einem konisch sich nach unten verjüngendem Rohr (Hydrozyklon) durchgeführt wird. Das Hochsiedergemisch umfasst Chlorsilane. Dabei wird von oben - am Kopf des Hydrozyklons - tangential Wasser zugeführt, wodurch sich ein rotierender Wasserkegel ausbildet. Das flüssige Hochsiedergemisch wird ebenfalls am Kopf des Hydrozyklons über eine Zweistoff- oder Zweikanaldüse zusammen mit einem inerten Trägergas in den Wasserkegel gesprüht. Durch die große Wasseroberfläche und die Feinverteilung des Hochsiedergemischs in Form des Sprühstrahls kann ein schnelles und gleichmäßiges Abreagieren gewährleistet werden.

Allerdings kann es bei derartigen Verfahren zu Unterbrechungen des Hydrolyseprozesses kommen. Diese Unterbrechungen können insbesondere durch Verblockungen und Ablagerungen in Form von fester oder gelartiger Kieselsäure im Bereich der Zweistoffdüse und des konischen Rohres auftreten. Insbesondere im Nahbereich der Düse können Verblockungen durch einen Kontakt der fein verteilten (zerstäubten) Hochsieder mit Wasserdampf auftreten. Es sind häufig Reinigungsarbeiten durchzuführen, die eine geringere Anlagenverfügbarkeit und somit höhere Herstellungskosten zur Folge haben. Es kann durchaus üblich sein, dass ein Hydrozyklon gemäß dem obigen Beispiel durchschnittlich einmal pro Tag einer Reinigung unterzogen werden muss.

Die WO 2009/037923 A1 beschreibt eine Vorrichtung zur Dampfphasenhydrolyse bei der die zu hydrolisierende Verbindung zusammen mit Wasser und einem inerten Trägergas mittels einer Dreistoff- oder Dreikanaldüse in einem Brennraum vermischt wird. Die Vermischung und damit die Hydrolyse der Verbindung erfolgt insbesondere am Düsenauslass.

Allerdings kann es bei der beschriebenen Vorrichtung zu einem Auftreten von Rezirkulationszonen (Verwirbelungen) im Bereich stromabwärts der Düse kommen. In diesen Zonen niedriger Strömungsgeschwindigkeit kommt es bevorzugt zu Ablagerungen, da ein Abtransport der entstehenden Hydrolyseprodukte nicht mehr gewährleistet ist. Ferner wird die Hydrolyse in einem Temperaturbereich zwischen 850 und 1100°C durchgeführt. Der Betrieb der Vorrichtung in diesem Temperaturbereich erfordert einen erheblichen technischen Aufwand (insb. Kühlung und Heizung).

Der Erfindung lag daher die Aufgabe zugrunde, eine wartungsfreie Vorrichtung zur Hydrolyse von Verbindungen bereitzustellen, bei welcher die aus dem Stand der Technik bekannten Nachteile nicht auftreten. Die Hydrolyse sollte ferner in einem Temperaturbereich stattfinden, der geringere Materialanforderungen stellt.

Diese Aufgabe wird gelöst durch eine Vorrichtung mit den Merkmalen des Anspruchs 1 sowie durch ein Verfahren mit den Merkmalen des Anspruchs 10.

Bei der erfindungsgemäßen Vorrichtung zur Hydrolyse zumindest einer Verbindung handelt es sich vorzugsweise um eine Düse oder Austragsvorrichtung, die einen ersten zylindrischen Abschnitt und einen zweiten sich verjüngenden Abschnitt sowie mindestens zwei Kanäle - einen zentralen Kanal und einen Außenkanal - umfasst. Die Längsachse $A_L$ verläuft vorzugsweise mittig durch den zentralen Kanal und vorzugsweise ebenfalls mittig durch den Auslass. Der Außenkanal umgibt den zentralen Kanal koaxial. Grundsätzlich kann durch jeden Kanal ein beliebiges Medium in flüssiger oder gasförmiger Form geleitet werden. Die Vorrichtung kann daher beispielsweise auch als Mehrstoff-oder Mehrkomponentendüse bezeichnet werden.

Gemäß der Erfindung weist der zweite Abschnitt der Vorrichtung im Querschnitt entlang der Längsachse $A_L$ ein Profil auf, dass durch zwei tangential ineinander übergehende Radien R1 und R2 beschrieben ist, wobei gemäß einer bevorzugten Ausführungsform das Verhältnis der Radien R1 und R2 zum Durchmesser $D_A$ des Auslass definiert ist als $0,8 < R1/D_A < 2,0$ und $1,0 < R2/D_A < 3,0$.

Bei dem Profil des zweiten Abschnitts handelt es sich um eine Außenwand eines Hohlvolumens im Inneren der Vorrichtung, das auch eine Mischzone, in welcher eine Durchmischung der an der Hydrolyse beteiligten Medien stattfindet, umfasst. Ein durch den Radius R2 beschriebenes Profilteilstück schließt sich, insbesondere tangential, an eine im Profil gerade - vorzugsweise parallel zur Achse $A_L$ - verlaufende Wand des Außenkanals im ersten Abschnitt an. An ein durch den Radius R1 beschriebenes Profilteilstück schließt sich, insbesondere tangential, der Auslass mit seinem Durchmesser $D_A$ an.

Es hat sich gezeigt, dass die erfindungsgemäße Gestaltung des Profils des zweiten Abschnitts im Betrieb der Vorrichtung das Auftreten von Rezirkulationszonen, Rückströmzonen und Ruhezonen im Bereich der Außenwand des Hohlvolumens verhindert. Einem längeren Kontakt sowohl der zu hydrolisierenden Verbindung als auch der Hydrolyseprodukte mit der Außenwand wird auf diese Weise vorgebeugt. Durch die kurze Kontaktzeit und die hohen Strömungsgeschwindigkeiten in unmittelbarer Nähe zur Außenwand wird die Ausbildung von Ablagerungen an der Außenwand verhindert. Dies gewährleistet lange Betriebszeiten, da sich eine Außerbetriebnahme der Vorrichtung zu Reinigungszwecken erübrigt.

Die spezielle geometrische Gestaltung der erfindungsgemäßen Vorrichtung führt zur Ausbildung einer Mischzone minimaler Größe, in welcher die an der Hydrolyse beteiligten Komponenten vermischt werden, die sich in ausreichendem Abstand zur Außenwand befindet. Ferner treten keine Rezirkulationszonen, Rückströmzonen und Ruhezonen auf, welche die Bildung von Ablagerungen, insbesondere aus Hydrolyseprodukten, begünstigen.

Gemäß einer weiteren Ausführungsform umfasst die Vorrichtung zwischen dem Außenkanal und dem zentralen Kanal zumindest einen weiteren Zwischenkanal, der den zentralen Kanal koaxial umgibt. Bevorzugt umfasst die Vorrichtung acht, besonders bevorzugt vier, insbesondere zwei, weitere Zwischenkanäle. Insbesondere bevorzugt handelt es sich um eine Vorrichtung mit insgesamt drei Kanälen, also einem weiteren Zwischenkanal.

Vorzugsweise münden die Kanäle zumindest teilweise etwa auf Höhe des Scheitelpunkts der tangential ineinander übergehenden Radien R1 und R2 in den zweiten Abschnitt der Vorrichtung. Unter "zumindest teilweise" soll dabei verstanden werden, dass nicht alle Kanäle auf Höhe dieses Punkts zwingend in den zweiten Abschnitt münden. Bevorzugt mündet zumindest der zentrale Kanal auf Höhe des Scheitelpunkts in den zweiten Abschnitt. Ferner kann es bevorzugt sein, dass die Kanäle auf Höhe eines Punktes in den zweiten Abschnitt münden, der auf dem durch den Radius R2 beschriebenen Profilteilstück liegt.

Zwischen dem Auslass und dem Punkt, an welchem die Kanäle in den zweiten Abschnitt münden, insbesondere dem Scheitelpunkt, kann eine Mischungszone definiert werden, in welcher eine Durchmischung der zu hydrolisierenden Verbindung mit Wasser beginnt. Es hat sich herausgestellt, dass durch diese Ausgestaltung ein Kontakt zwischen einer Außenwand der Mischzone und der zu hydrolisierenden Verbindung bzw. der Hydrolyseprodukte weitestgehend vermieden wird. Ferner wird auf diese Weise eine besonders intensive Durchmischung im inneren, insbesondere achsnahen, Bereich der Mischzone realisiert.

Es kann vorgesehen sein, dass zumindest ein Kanal in den zweiten Abschnitt auf einer Höhe mündet, bei welcher der erste Abschnitt in den sich verjüngenden zweiten Abschnitt der Vorrichtung übergeht. Bevorzugt mündet der Außenkanal auf Höhe dieses Übergangs in den zweiten Abschnitt.

Gemäß einer weiteren Ausführungsform weisen die Kanäle einen bis zur Einmündung in den zweiten Abschnitt konstanten oder abnehmenden Strömungsquerschnitt auf. Die verschiedenen Kanäle der Vorrichtung können bezüglich dieser Eigenschaft auch unterschiedlich ausgestaltet sein. Der Außenkanal reduziert vorzugsweise seinen Strömungsquerschnitt auf eine Größe, die zwischen 10 und 60%, bevorzugt zwischen 20 und 50%, insbesondere zwischen 30 und 45%, der Größe eines Eintrittsquerschnitts entspricht. Insbesondere bevorzugt sind 40%.

Grundsätzlich können die Kanäle der Vorrichtung denselben oder voneinander verschiedene Strömungsquerschnitte aufweisen. Insbesondere kann der Strömungsquerschnitt des Außenkanals und/oder zumindest eines Zwischenkanals größer sein als der Strömungsquerschnitt des zentralen Kanals.

Zwischen einem Strömungsquerschnitt am Austritt (an der Einmündung des Außenkanals in den zweiten Abschnitt) des Außenkanals $A_{außen}$, und einem Strömungsquerschnitt des Auslass $A_A$ besteht vorzugsweise ein Verhältnis von $0,3 < A_{außen}/A_A < 20$; besonders bevorzugt $1,0 < A_{außen}/A_A < 10$; insbesondere $2,0 < A_{außen}/A_A < 8,0$.

Gemäß einer weiteren Ausführungsform ist das Verhältnis aus dem Durchmesser des ersten zylindrischen Abschnitts $D_{max}$ und dem Durchmesser des Düsenauslass $D_A$ definiert als $1 < D_{max}/D_A < 8$, bevorzugt $1,5 < D_{max}/D_A < 6$, besonders bevorzugt $2 < D_{max}/D_A < 5$.

Vorzugsweise ist dem Auslass ein dritter zylindrischer Abschnitt mit einer Länge l von $0 < l/D_A < 100$, bevorzugt $3 < l/D_A < 40$, besonders bevorzugt $5 < l/D_A < 20$, nachgeordnet. Insbesondere handelt es sich dabei um ein Rohr oder Schlauch, dessen Innendurchmesser vorzugsweise dem Durchmesser des Auslass $D_A$ entspricht.

Der dritte zylindrische Abschnitt gewährleistet insbesondere, dass bei der Hydrolyse gegebenenfalls freigesetzte Reaktionswärme abgeführt werden kann. Bevorzugt ist der dritte Abschnitt daher aus einem hitzebeständigem Material, beispielsweise Edelstahl, gefertigt.

Vorzugsweise findet die Hydrolyse in einem Temperaturbereich bis maximal 200°C statt.

Die Vorrichtung kann einstückig oder mehrstückig ausgestaltet sein. Bevorzugt ist der dritte zylindrische Abschnitt, insbesondere in Form eines Rohres, lösbar mit dem zweiten Abschnitt verbunden, beispielsweise verschraubt, verklebt oder verspannt. Insbesondere kann es sich bei der Vorrichtung um eine den ersten und den zweiten Abschnitt umfassende Düse handeln, die vorzugsweise lösbar mit einem Rohr verbunden ist, welches den dritten Abschnitt umfasst.

Gemäß einer weiteren Ausführungsform ist in dem zentralen Kanal eine entlang der Achse $A_L$ bewegliche Durchstoßvorrichtung zur Entfernung von Ablagerungen angeordnet. Durch Bewegung der Durchstoßvorrichtung in Richtung des Auslass können Ablagerungen in diesem Bereich mechanisch entfernt werden. Die Durchstoßvorrichtung kann sowohl manuell als auch automatisch, beispielsweise nach bestimmten Zeitintervallen mittels eines Elektromotors, bewegt werden. Die Durchstoßvorrichtung ist bevorzugt zylindrisch ausgebildet und weist vorzugsweise eine Querschnittsfläche auf, die kleiner ist als der Strömungsquerschnitt des zentralen Kanals. Auf diese Weise kann im Betrieb der Vorrichtung weiterhin Flüssigkeit den zentralen Kanal passieren, auch wenn die Durchstoßvorrichtung in Richtung des Auslass bewegt wird. Eine Abschaltung der Vorrichtung zu Reinigungszwecken erübrigt sich dadurch.

Vorzugsweise ist die Durchstoßvorrichtung allerdings derart angeordnet, dass sie im zurückgezogenen Zustand (Normalbetrieb) den Strömungsquerschnitt des zentralen Kanals nicht verkleinert. Dies kann beispielsweise dadurch gewährleistet werden, dass der zentrale Kanal eine seitliche Flüssigkeitszufuhr aufweist, die vor der Durchstoßvorrichtung angeordnet ist (in Richtung des Austritts des Kanals).

Ein weiterer Aspekt der Erfindung betrifft ein Verfahren zur Hydrolyse mindestens einer Verbindung, bei dem mittels der beschriebenen Vorrichtung Wasser zumindest durch den Außenkanal und die zu hydrolisierende Verbindung durch den zentralen Kanal und/oder durch zumindest einen Zwischenkanal geleitet und im zweiten Abschnitt zumindest teilweise miteinander vermischt werden. Die Verbindung und das Wasser liegen dabei jeweils als Flüssigkeit vor.

Es hat sich gezeigt, dass die Hydrolyse einer Verbindung unter Verwendung der Vorrichtung besonders effektiv ist, wenn sämtliche an der Hydrolyse beteiligten Komponenten ausschließlich in flüssigem Zustand miteinander vermischt werden. Üblicherweise erfolgt eine Durchmischung der Komponenten durch Zerstäubung zumindest einer Komponente. Ferner ist es üblich den zu mischenden Komponenten ein Gas, das in der Regel nicht an der Hydrolyse beteiligt ist, beizumengen. Unter Ausbildung einer Blasenströmung erfolgt dann die Durchmischung. Insbesondere die Zuführung eines zusätzlichen Gases kann mit einem erhöhten apparativen Aufwand verbunden sein. Dieser Aufwand entfällt vorliegend. Ein weiterer Nachteil bei der Zerstäubung ist, dass sich eine relativ große Mischzone ausbildet. Wie oben bereits erwähnt ist die sich gemäß dem erfindungsgemäßen Verfahren ausbildende Mischzone von minimaler Größe.

Mit besonderem Vorteil wird durch die Zuführung von Wasser durch den den zentralen Kanal konzentrisch umgebenden Außenkanal ein Wassermantel entlang des Profils des zweiten Abschnitts erzeugt, der einen Wandkontakt der Hydrolyseprodukte auf ein Minimum reduziert und gegebenenfalls entstehende Ablagerungen sofort wegspült. Mit anderen Worten, umgibt der Wassermantel die sich ausbildende Mischzone und grenzt diese im Wesentlichen von der Außenwand des Hohlvolumens des zweiten Abschnitts ab.

Grundsätzlich eignet sich das Verfahren zum Aufarbeiten von jedweder Art von hydrolisierbaren und/oder wasserlöslichen Verbindungen. Insbesondere geeignet ist das Verfahren für Verbindungen, bei welchen sich während der Reaktion mit Wasser Feststoffe bilden, die zu Ablagerungen in Zu- oder Ableitungen und damit zu Verblockungen führen können.

Bei der als Flüssigkeit vorliegenden Verbindung kann es sich insbesondere auch um Emulsionen und/oder Suspensionen handeln.

Bevorzugt ist die Verbindung ausgewählt aus einer Gruppe mit Halogensilanen (z.B. Tetrachlorsilan), Siloxanen (z.B. Hexachlorsilan, Pentachlorsilan) und Mischungen davon.

Besonders vorteilhaft lässt sich das Verfahren bei der Aufarbeitung von Reaktionsprodukten der Herstellungsprozesse von Halbleitern, insbesondere Polysilicium, aus der Gasphase einsetzen. Gleichermaßen vorteilhaft ist es anwendbar für die Vernichtung von aggressiven Destillationsrückständen in der organischen und anorganischen Chemie.

Gemäß einer bevorzugten Ausführungsform wird ein die zu hydrolisierende Verbindung führender Kanal zumindest von einem Wasser führenden Kanal flankiert.

Auf diese Weise wird sichergestellt, dass die zu hydrolisierende Verbindung, insbesondere bei Vorrichtungsausführungen mit mehr als einem Zwischenkanal, nach dem Austritt aus dem Kanal unmittelbar eine Grenzfläche mit Wasser bildet, wodurch es in der Mischzone zu einer besonders guten Durchmischung kommt.

Besonders bevorzugt sind Kanäle, welche die Verbindung führen und Kanäle, welche Wasser führen, in alternierender Reihenfolge angeordnet. Diese Ausführung kann insbesondere vorteilhaft sein, wenn es sich um mehrere zu hydrolisierende Verbindungen handelt. Die alternierende Zuführung von Wasser und der zu hydrolisierenden Verbindung durch die Kanäle der Vorrichtung führt zu einer besonders schnellen Durchmischung in der Mischzone.

Vorzugsweise werden die zu hydrolisierende Verbindung und Wasser mit unterschiedlichen Strömungsgeschwindigkeiten durch die Kanäle geleitet. Die Bestimmung der Strömungsgeschwindigkeiten erfolgt vorzugsweise über eine Massenstrommessung, bevorzugt durch eine Blendenmessung, besonders bevorzugt mittels eines Coriolis-Massendurchflussmessgeräts. Die Strömungsgeschwindigkeiten lassen sich aus dem Massenstrom anhand der folgenden Gleichung bestimmen.

$$V_i = \frac{\dot{m}_i}{\rho_i * A_i}$$

$A_i$ ist der jeweilige Kanalquerschnitt senkrecht zur Strömungsrichtung. $\rho_i$ ist die Dichte des Mediums im jeweiligen Kanal, die aufgrund der bekannten Eintrittstemperaturen und Zusammensetzung des Mediums berechnet werden kann.

Durch die unterschiedlichen Strömungsgeschwindigkeiten wird beim Austritt der Komponenten aus den Kanälen - bei der Einmündung der Kanäle in den zweiten Abschnitt - ein Strömungsgeschwindigkeitsprofil (Austrittsgeschwindigkeitsprofil) erzeugt, das zwischen den einzelnen Kanälen Strömungsgeschwindigkeitsgradienten aufweist. Dadurch entstehen intensive Scherungen an den jeweiligen Grenzflächen zwischen Wasser und der zu hydrolisierenden Verbindung, die eine intensive und turbulente Durchmischung der Komponenten bewirken.

Gemäß einer bevorzugten Ausführungsform ist für zwei benachbarte Kanäle, von denen einer die Verbindung mit einer mittleren Austrittsgeschwindigkeit $V_V$ und einer Wasser mit einer mittleren Austrittsgeschwindigkeit $V_{H2O}$ führt, der Betrag einer Differenz zwischen $V_V$ und $V_{H2O}$ definiert als 0 m/s < $|V_V - V_{H2O}|$ < 200 m/s, bevorzugt 2 m/s < $|V_V - V_{H2O}|$ < 100 m/s, besonders bevorzugt 5 m/s < $|V_V - V_{H2O}|$ < 50 m/s.

Die Bestimmung der Austrittsgeschwindigkeiten erfolgt, wie oben beschrieben, bevorzugt durch eine Massenstrommessung, wobei die Querschnitte am Austritt der Kanäle senkrecht zur Strömungsrichtung, die bevorzugt parallel zur Kanalachse verläuft, als Bezug verwendet werden.

Vorzugsweise besteht zwischen allen benachbarten Kanälen eine Differenz zwischen den mittleren Austrittsgeschwindigkeiten der die Kanäle verlassenden Komponenten.

Gemäß einer weiteren Ausführungsform verlässt das Wasser den Außenkanal mit einer mittleren Austrittsgeschwindigkeit $V_{außen}$ von mehr als 0,5 m/s, bevorzugt mehr als 2 m/s, besonders bevorzugt mehr als 4 m/s. Die mittlere Austrittsgeschwindigkeit, mit der das Wasser den Außenkanal verlässt, erzeugt in der Nähe der Außenwand des Hohlvolumens hohe Strömungsgeschwindigkeiten. Diese Strömungsgeschwindigkeiten können sich insbesondere auch im Bereich von Innenwandungen des dritten Abschnitts fortsetzen. Gegebenenfalls entstehende Ablagerungen aus Hydrolyseprodukten werden so abgespült. Eine Verblockung des Auslass und des dritten Abschnitts wird auf diese Weise verhindert und die Standzeit der Vorrichtung erhöht. Vorzugsweise weist ein die Verbindung führender Kanal einen Massenstrom $\dot{m}_V$ und ein Wasser führender Kanal einen Massenstrom $\dot{m}_{H2O}$ auf, wobei ein Verhältnis aus der Summe der Massenströme $\sum \dot{m}_{Vi}$ von allen die Verbindung führenden Kanälen und der Summe der Massenströme $\sum \dot{m}_{H2Oj}$ von allen Wasser führenden Kanälen definiert ist als 0 < $\sum \dot{m}_{Vi}/\sum \dot{m}_{H2Oj}$ < 1,0, bevorzugt 0 < $\sum \dot{m}_{Vi}/\sum \dot{m}_{H2Oj}$ < 0,5, besonders bevorzugt 0 < $\sum \dot{m}_{Vi}/\sum \dot{m}_{H2Oj}$ < 0,2.

Insbesondere bei stark exothermen Reaktionen kann der Wasserüberschuss maximale Temperaturen in der Mischzone von unter 100°C gewährleisten. Eine aufwändige Handhabung besonders heißer Reaktionsprodukte entfällt somit.

Die Vorteile der Erfindung können wie folgt zusammengefasst werden.

Ablagerungen werden sowohl im Bereich des zweiten Abschnitts als auch im Bereich des dritten Abschnitts vermieden. Dadurch erhöht sich die Standzeit der erfindungsgemäßen Vorrichtung im Vergleich zu aus dem Stand der Technik bekannten Hydrolysevorrichtungen um mindestens das Fünffache. Der Reinigungsaufwand verringert sich erheblich. Üblicherweise ist ein Hydrozyklon einmal am Tag zu reinigen. Dagegen ist die erfindungsgemäße Vorrichtung maximal einmal pro Woche zu reinigen. Die einphasige Zugabe aller an der Hydrolyse Beteiligten Komponenten in Verbindung mit der geometrischen Ausgestaltung insbesondere des zweiten Abschnitts der Vorrichtung sowie der verfahrensgemäßen Zuführung der Komponenten bewirkt die Ausbildung einer Mischzone minimaler Größe mit homogener Durchmischung. Unter einphasig soll die Zugabe sämtlicher Komponenten in flüssiger Form verstanden werden. Aufgrund der kompakten Mischzone lässt sich der Durchsatz an Hochsiedern im Vergleich zum bisher eingesetzten Hydrozyklon deutlich steigern.

**Fig. 1** zeigt den Querschnitt einer Vorrichtung zur Ausführung des erfindungsgemäßen Verfahrens.

**Fig. 2** und **Fig. 3** zeigen jeweils ein Geschwindigkeitsprofil mittlerer Austrittsgeschwindigkeiten von Flüssigkeiten während des erfindungsgemäßen Verfahrens.

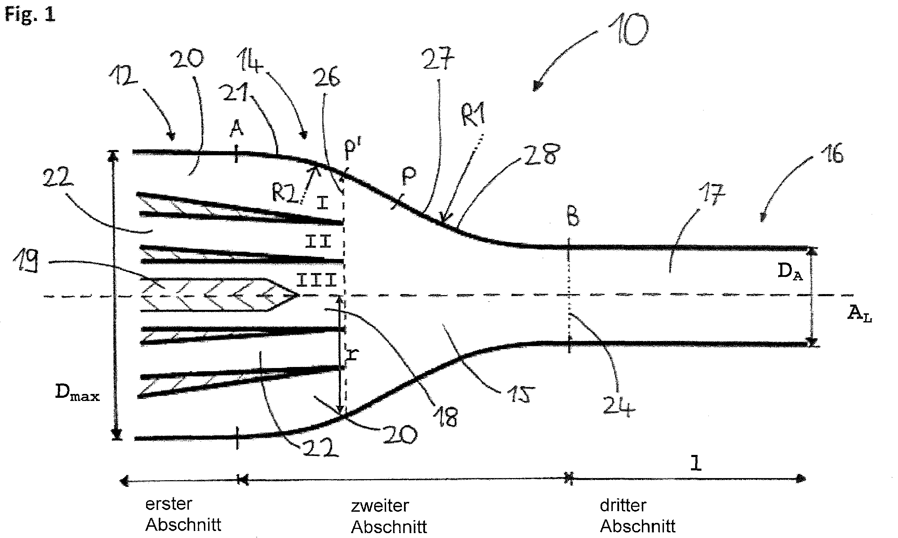

Fig.1 zeigt eine schematische Querschnittdarstellung der erfindungsgemäßen Vorrichtung 10 entlang einer Längsachse $A_L$. Die Vorrichtung 10 umfasst einen ersten zylindrischen Abschnitt 12 mit einem Durchmesser $D_{max}$, einen zweiten sich verjüngenden Abschnitt 14 sowie einen dritten zylindrischen Abschnitt 16 mit einer Länge l. Die Vorrichtung 10 umfasst weiterhin einen zentralen Kanal 18, einen diesen koaxial umgebenden Außenkanal 20 sowie einen den zentralen Kanal koaxial umgebenden Zwischenkanal 22. Der erste Abschnitt 12 und der zweite Abschnitt 14 sind Bestandteil einer Düse, die einen Auslass 24 mit einem Durchmesser $D_A$ aufweist. Bei dem dritten Abschnitt 16, der nicht vollständig dargestellt ist, handelt es sich um ein Reaktionsrohr, beispielsweise aus Edelstahl, welches sich bündig an den Auslass 24 anschließt und dessen Innenvolumen 17 denselben Durchmesser $D_A$ aufweist. Das Verhältnis $l/D_A$ beträgt 10. Das Verhältnis $D_{max}/D_A$ beträgt 3.

Der zweite Abschnitt 14, in welchen die Kanäle 18,20,22 münden, umfasst ein Hohlvolumen 15, das sich vom Auslass 24 bis zu einer vorzugsweise kreisrunden Mündungsebene 26 der Kanäle 18,20,22 erstreckt. Der zweite Abschnitt 14 ist durch ein Profil 28 definiert, das sich zwischen den Punkten A und B erstreckt und durch zwei tangential ineinander übergehende Radien R1 und R2 beschrieben werden kann. P definiert den Scheitelpunkt, an dem die beiden Radien R1, R2 ineinander übergehen. Bei dem Profil 28 handelt es sich abschnittsweise um eine das Hohlvolumen 15 begrenzende Wand 27. Die Wand 27 wird durch einen Profilabschnitt zwischen den Punkten B und P' beschrieben, wobei es sich bei P' um den Schnittpunkt der Mündungsebene 26 mit dem Profil 28 handelt. Einen weiteren Abschnitt des Profils 28 bildet ein Teil einer Wand 21 des Außenkanals 20 zwischen den Punkten P' und A. Das Verhältnis $R1/D_A$ beträgt 1 und das Verhältnis $R2/D_A$ beträgt 2.

In dem zentralen Kanal 18 ist eine, vorzugsweise an ihrem vorderen Ende spitz zulaufende, Durchstoßvorrichtung 19 angeordnet. Diese lässt sich entlang der Achse $A_L$ mindestens bis zum Auslass 24 verschieben und dient der Beseitigung von Ablagerungen, die im Betrieb der Vorrichtung 10 insbesondere im Bereich des Hohlvolumens 15 und des Auslass 24 auftreten können. Die Dimensionierung der Durchstoßvorrichtung 19 ist derart, dass der zentrale Kanal 18 von einer Flüssigkeit durchströmt werden kann.

**Beispiel 1**

Unter Verwendung einer Vorrichtung 10 wie sie schematisch in der Fig. 1 dargestellt ist wurden die bei der Herstellung von Polysilicium anfallenden Chlorsilane (typischerweise ein Gemisch aus Tetrachlorsilan, Disilanen und Disiloxanen) einer Hydrolyse mit Wasser unterzogen. Sowohl die Chlorsilane als auch das Wasser wurden als Flüssigkeit in einem Temperaturbereich von 20 bis 30°C unter einem Druck von ca. 1 bis 3 bar absolut der Vorrichtung zugeführt. Dabei wurde Wasser durch den Außenkanal 20 und den Zwischenkanal 22 geleitet, während die Chlorsilane durch den zentralen Kanal 18 geleitet wurden.

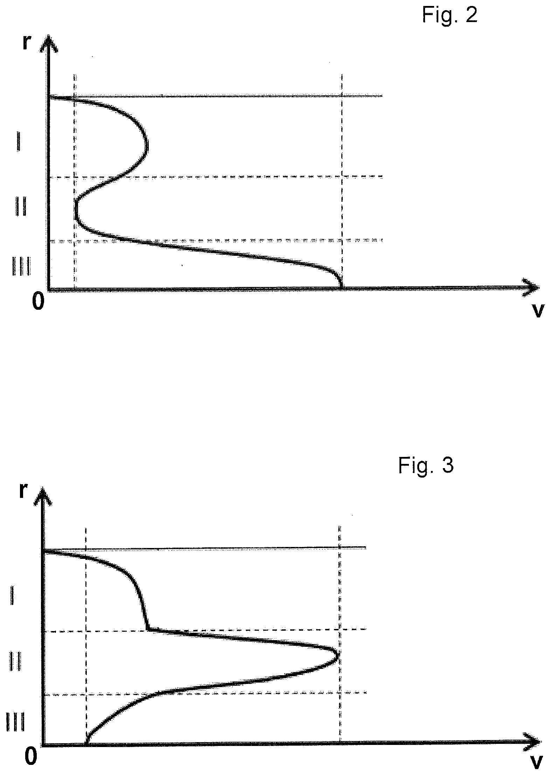

Fig. 2 zeigt ein Geschwindigkeitsprofil der Austrittsgeschwindigkeiten der Flüssigkeiten am Ort der Mündungsebene 26, wo die Flüssigkeiten in das Hohlvolumen 15 eintreten (vgl. Fig. 1). Auf der Ordinate ist in Anlehnung an Fig. 1 der Radius r der kreisrunden Mündungsebene 26 aufgetragen. Auf der Abszisse ist die Austrittsgeschwindigkeit v aufgetragen. Die Zone III (Chlorsilanstrom) zeigt dabei die Strömungsgeschwindigkeiten des zentralen Kanals 18, während die Zonen II und I (Wasserstrom) den Austrittsgeschwindigkeiten des Zwischenkanals 22 bzw. des Außenkanals 20 entsprechen.

Der Chlorsilanstrom in Zone III weist die höchste (40 m/s), der diesen flankierende Wasserstrom in Zone II die niedrigste (2 m/s) mittlere Geschwindigkeit auf. Aufgrund dieses Unterschieds kommt es an der Grenzfläche der beiden Ströme zu intensiven Scherungen, wodurch unmittelbar nach dem Verlassen der Kanäle eine gründliche Durchmischung stattfindet. Die besonders gute Durchmischung bewirkt, dass die Hydrolyse bereits im Bereich des Auslass 24 abgeschlossen ist. Auf diese Weise kann das der Kühlung dienende Reaktionsrohr kurz gehalten werden, was zu einer Materialeinsparung führt.

Der Wasserstrom aus dem Außenkanal 20 (Zone I), der eine höhere Geschwindigkeit (4 m/s) als der Wasserstrom aus Zone II aufweist, ummantelt zum einen die sich ausbildende Mischzone, in welcher sich insbesondere Wasser aus Zone II und die Chlorsilane aus Zone III mischen. Dadurch wird verhindert, dass Hydrolyseprodukte in Kontakt mit der Wand 27 treten können. Die Entstehung von Ablagerungen wird so weitestgehend vermieden. Zum anderen wird in Verbindung mit dem speziell ausgestalteten Profil 28 eine schnelle Wasserströmung entlang der Wand 27 erzeugt, wodurch gegebenenfalls an der Wand 27 entstandene Ablagerungen abgespült werden. Die Betriebsdauer der Vorrichtung erhöht sich signifikant. Im Vergleich zu den bisher verwendeten Hydrozyklonen konnte die Standzeit um den Faktor 7 auf etwa 200 Stunden erhöht werden. Der Durchsatz an Chlorsilanen konnte um den Faktor 3 auf 600 l/h erhöht werden.

**Beispiel 2**

Unter Verwendung der Vorrichtung aus Fig. 1 wurden die bei der Herstellung von Polysilicium typischerweise anfallenden Chlorsilane einer Hydrolyse mit Wasser unterzogen. Die Reaktionsbedingungen waren identisch zu denen aus Beispiel 1.

Gemäß Fig. 3 wurden allerdings im Gegensatz zu Beispiel 1 die Chlorsilane durch den Zwischenkanal 22 (Zone II) mit einer maximalen mittleren Austrittsgeschwindigkeit von 10 m/s geleitet. Der Chlorsilanstrom wurde von zwei Wasserströmen (Zonen I und III) flankiert, wobei der Wasserstrom des zentralen Kanals 18 die niedrigste Austrittsgeschwindigkeit von 2 m/s aufwies. Der große Geschwindigkeitsunterschied bewirkte auch hier eine intensive Durchmischung der Chlorsilane mit dem Wasserstrom (Zone III). Da der Hochsiederstrom (Zone II) beidseitig mit Wasser flankiert ist, konnten größere Mengen an Chlorsilanen umgesetzt werden. Im Vergleich mit den bisher verwendeten Hydrozyklonen konnte die Standzeit um den Faktor 5 auf 143 Stunden erhöht werden. Der Durchsatz an Chlorsilanen konnte um den Faktor 6 auf 1200 1/h erhöht werden.

Die Ausführungsform gemäß Fig. 3 eignet sich insbesondere zur Hydrolyse von Verbindungen, die in Bezug auf sich ausbildende Ablagerungen weniger problematisch sind. Durch die sich in dieser Ausführungsform ausbildende besonders große Mischzone kann eine sehr schnelle Hydrolysereaktion erreicht werden, wodurch gegebenenfalls auf einen dritten Abschnitt 16 in Form eines Reaktionsrohres verzichtet werden kann.

**Beispiel 3**

Unter Verwendung der Vorrichtung aus Fig. 1 wurden die bei der Herstellung von Polysilicium typischerweise anfallenden Chlorsilane einer Hydrolyse mit Wasser unterzogen. Die Reaktionsbedingungen waren identisch zu denen aus Beispiel 1.

Die Chlorsilane wurden mit einer mittleren Austrittsgeschwindigkeit von 8 m/s durch den zentralen Kanal 18 (Zone III) geleitet. Wasser wurde mit einer Austrittgeschwindigkeit von 35 m/s durch den Zwischenkanal 22 (Zone II) sowie mit einer Austrittsgeschwindigkeit von 3 m/s durch den Außenkanal 20 (Zone I) geleitet. Das Geschwindigkeitsprofil entspricht dabei im Wesentlichen dem in der Fig. 3 gezeigten. Durch den großen Geschwindigkeitsunterschied zwischen den Zonen III und II kommt es zu einer intensiven Durchmischung im Bereich des Hohlvolumens 15, wobei entstehende Reaktionsprodukte durch den Wasserstrom im Außenkanal 20 von der Wand 27 ferngehalten werden. Im Vergleich zu den bisher verwendeten Hydrozyklonen konnte die Standzeit um den Faktor 10 auf etwa 290 Stunden erhöht werden. Der Durchsatz an Chlorsilanen lag mit 200 1/h auf dem Wert des bisher eingesetzten Hydrozyklons.

Diese Ausführungsform eignet sich insbesondere zur Hydrolyse von Hochsiedergemischen, deren Hydrolyseprodukte eine erhöhte Tendenz zur Ausbildung von Ablagerungen aufweisen. Hier sind insbesondere Medien zu nennen, die höhere Konzentrationen an Metallchloriden, z.B. $Al_2Cl_3$ oder $TiCl_4$, aufweisen.

**Beispiel 4**

Unter Verwendung der Vorrichtung aus Fig. 1 wurden die bei der Herstellung von Polysilicium typischerweise anfallenden Chlorsilane einer Hydrolyse mit Wasser unterzogen. Die Reaktionsbedingungen waren identisch zu denen aus Beispiel 1.

Die Chlorsilane wurden mit einer mittleren Austrittsgeschwindigkeit von 2 m/s durch den Zwischenkanal 22 (Zone II) geleitet. Der Chlorsilanstrom wurde von zwei Wasserströmen (Zonen I und III) flankiert, wobei der Wasserstrom des zentralen Kanals 18 die höchste Austrittsgeschwindigkeit von 50 m/s aufwies. Das Geschwindigkeitsprofil entspricht dabei im Wesentlichen dem in der Fig. 2 gezeigten. Bezüglich der Durchmischung kann auf die Ausführungen zu Beispiel 2 verwiesen werden. Im Vergleich zu den bisher verwendeten Hydrozyklonen konnte die Standzeit um den Faktor 8 auf etwa 220 Stunden erhöht werden. Der Durchsatz an Chlorsilanen konnte um den Faktor 3 auf 600 1/h erhöht werden.

Diese Ausführungsform eignet sich insbesondere zur Hydrolyse von Hochsiedergemischen, deren Hydrolyseprodukte eine sehr hohe Tendenz zur Ausbildung von Ablagerungen aufweisen. Auch hier sind insbesondere Medien zu nennen, die höhere Konzentrationen an Metallchloride, z.B. $Al_2Cl_3$ oder $TiCl_4$, aufweisen. Ferner ist diese Ausführungsform besonders geeignet für stark exotherme Hydrolysereaktionen, da die entstehende Wärme durch den Überschuss an Wasser schnell abgeführt werden kann.

**Vergleichsbeispiel**

Die bei der Herstellung von Polysilicium typischerweise anfallenden Chlorsilane wurden einer Hydrolyse mit Wasser unter Verwendung eines Hydrozyklons unterzogen. Funktionsweise und Aufbau des Zyklons sind aus DE 28 20 617 A1 bekannt.

Die Halogensilane werden über eine freihängende Zweistoffdüse mit Hilfe eines inerten Gases, beispielsweise Stickstoff, in einen Zyklon gesprüht. Durch eine tangentiale Zugabe von Wasser an einem oberen Ende des Zyklons kommt das Halogensilangemisch mit Wasser in Kontakt. Da es sich bei der Reaktion zwischen Hochsieder und Wasser um eine exotherme Reaktion handelt, wird das zugeführte Wasser teilweise verdampft. Der aufsteigende Wasserdampf feuchtet die Zweistoffdüse an, wodurch regelmäßig Verblockungen auftreten, die zu einer Verstopfung der Zweistoffdüse führen können. Aufgrund des großen Verhältnisses zwischen der benetzten Oberfläche des Zyklons und dem Wasservolumenstrom werden die Reaktanden nicht vollständig abgewaschen (kleine Strömungsgeschwindigkeiten). Dies führt ebenfalls zu regelmäßig auftretenden Verblockungen. Die Standzeit des Zyklons beträgt daher nur etwa 28 Stunden. Der Durchsatz an Chlorsilanen beträgt 200 [l/h].

Ein weiterer Vorteil der erfindungsgemäßen Vorrichtung ist der gegenüber dem Hydrozyklon geringe Reinigungsaufwand, was sich in einer geringeren Standzeit widerspiegelt. Während für die Reinigung der erfindungsgemäßen Vorrichtung lediglich maximal 2 Stunden benötigt werden, ist für die Reinigung des Hydrozyklons eine Standzeit von etwa 48 Stunden erforderlich. Ist die erfindungsgemäße Vorrichtung mit einer Durchstoßvorrichtung zur Entfernung von Ablagerungen versehen, lässt sich die Standzeit zu Reinigungszwecken weiter reduzieren, da die Durchstoßvorrichtung Verblockungen bereits im laufenden Betrieb entfernen kann.

**Patentansprüche**

1. Vorrichtung (10) zur Hydrolyse mindestens einer Verbindung, umfassend

    - einen ersten zylindrischen Abschnitt (12) mit einem Durchmesser $D_{max}$, einem zentralen Kanal (18) und einem den zentralen Kanal (18) koaxial umgebenden Außenkanal (20),
    - einen Auslass (24) mit einem Durchmesser $D_A$

und

- einen sich zum Auslass (24) hin verjüngenden zweiten Abschnitt (14), umfassend ein Hohlvolumen (15), in welchen die Kanäle (18, 20, 22) münden, wobei
der zweite Abschnitt (14) im Querschnitt entlang einer Längsachse $A_L$ der Vorrichtung (10) ein Profil (28) einer das Hohlvolumen (15) begrenzenden Außenwand aufweist, das durch zwei tangential ineinander übergehende Radien R1 und R2 beschrieben ist, wobei sich ein durch R1 beschriebenes Profilteilstück an den Auslass (24) anschließt und sich ein durch R2 beschriebenes Profilteilstück an eine im Profil gerade verlaufende Wand (21) des Außenkanals (20) anschließt, und wobei $0,2 < R1/D_A < 4,0$ und $0,3 < R2/D_A < 5,0$ ist.

2. Vorrichtung nach Anspruch 1, **dadurch gekennzeichnet, dass** $0,8 < R1/D_A < 2,0$ und $1,0 < R2/D_A < 3,0$ ist.

3. Vorrichtung nach Anspruch 1 oder 2, **dadurch gekennzeichnet, dass** zwischen dem zentralen Kanal (18) und dem Außenkanal (20) acht, bevorzugt vier, besonders bevorzugt zwei, insbesondere ein, den zentralen Kanal (18) koaxial umgebende Zwischenkanäle (22) angeordnet sind.

4. Vorrichtung nach einem der vorherigen Ansprüche, **dadurch gekennzeichnet, dass** die Kanäle (18, 20, 22) zumindest teilweise auf Höhe eines Scheitelpunkts P der tangential ineinander übergehenden Radien R1 und R2 in den zweiten Abschnitt (14) münden.

5. Vorrichtung nach einem der vorherigen Ansprüche, **dadurch gekennzeichnet, dass** die Kanäle (18, 20, 22) einen bis zur Einmündung in den zweiten Abschnitt (14) konstanten oder abnehmenden Strömungsquerschnitt aufweisen.

6. Vorrichtung nach einem der vorherigen Ansprüche, **dadurch gekennzeichnet, dass** zwischen einem Strömungsquerschnitt $A_{außen}$ des Außenkanals (20) und einem Strömungsquerschnitt $A_A$ des Auslass (24) ein Verhältnis von $0,3 < A_{außen}/A_A < 20,0$, bevorzugt $1,0 < A_{außen}/A_A < 10,0$, besonders bevorzugt $2,0 < A_{außen}/A_A < 8,0$, besteht.

7. Vorrichtung nach einem der vorherigen Ansprüche, **dadurch gekennzeichnet, dass** $1 < D_{max}/D_A < 8$, bevorzugt $1,5 < D_{max}/D_A < 6$, besonders bevorzugt $2 < D_{max}/D_A < 5$, ist.

8. Vorrichtung nach einem der vorherigen Ansprüche, **dadurch gekennzeichnet, dass** dem Auslass (24) ein dritter zylindrischer Abschnitt (16) mit einer Länge 1 von $0 < l/D_A < 100$, bevorzugt $3 < l/D_A < 40$, besonders bevorzugt $5 < l/D_A < 20$, nachgeordnet ist.

9. Vorrichtung nach einem der vorhergehenden Ansprüche, **dadurch gekennzeichnet, dass** in dem zentralen Kanal (18) eine entlang der Achse $A_L$ bewegliche Durchstoßvorrichtung (19) zur Entfernung von Ablagerungen angeordnet ist.

10. Verfahren zur Hydrolyse mindestens einer Verbindung, bei dem mittels einer Vorrichtung (10) gemäß einem der Ansprüche 1 bis 9 Wasser zumindest durch den Außenkanal (20) und die zu hydrolisierende Verbindung durch den zentralen Kanal (18) und/oder durch zumindest einen Zwischenkanal (22) geleitet und im zweiten Abschnitt (14) zumindest teilweise miteinander vermischt werden, wobei die Verbindung und das Wasser als Flüssigkeit vorliegen.

11. Verfahren nach Anspruch 10, **dadurch gekennzeichnet, dass** ein die Verbindung führender Kanal zumindest von einem Wasser führenden Kanal flankiert wird.

12. Verfahren nach einem der Ansprüche 10 oder 11, **dadurch gekennzeichnet, dass** die Verbindung führende Kanäle und Wasser führende Kanäle in alternierender Reihenfolge angeordnet sind.

13. Verfahren nach einem der Ansprüche 10 bis 12, **dadurch gekennzeichnet, dass** für zwei benachbarte Kanäle, von denen einer die Verbindung mit einer mittleren Austrittsgeschwindigkeit $V_V$ und einer Wasser mit einer mittleren Austrittsgeschwindigkeit $V_{H2O}$ führt, der Betrag einer Differenz zwischen $V_V$ und $V_{H2O}$ $0\ m/s < |V_V - V_{H2O}| < 200\ m/s$, bevorzugt $2\ m/s < |V_V - V_{H2O}| < 100\ m/s$, besonders bevorzugt $5\ m/s < |V_V - V_{H2O}| < 50\ m/s$, ist.

14. Verfahren nach einem der Ansprüche 10 bis 13, **dadurch gekennzeichnet, dass** Wasser mit einer mittleren Austrittsgeschwindigkeit $V_{außen}$ von mehr als 0,5 m/s, bevorzugt mehr als 2 m/s, besonders bevorzugt mehr als 4 m/s, den Außenkanal (20) verlässt.

15. Verfahren nach einem der Ansprüche 10 bis 14, **dadurch gekennzeichnet, dass** ein die Verbindung führender Kanal einen Massenstrom $\dot{m}_V$ und ein Wasser führender Kanal einen Massenstrom $\dot{m}_{H2O}$ aufweist, wobei ein Verhältnis aus der Summe der Massenströme $\Sigma\dot{m}_{Vi}$ von allen die Verbindung führenden Kanälen und der Summe der Massenströme $\Sigma\dot{m}_{H2Oj}$ von allen Wasser führenden Kanälen $0 < \Sigma\dot{m}_{Vi}/\Sigma\dot{m}_{H2Oj} < 1,0$, bevorzugt $0 < \Sigma\dot{m}_{Vi}/\Sigma\dot{m}_{H2Oj} < 0,5$, besonders bevorzugt $0 < \Sigma\dot{m}_{Vi}/\Sigma\dot{m}_{H2Oj} < 0,2$, ist.

**Claims**

1. Device (10) for hydrolysing at least one compound, comprising

   - a first cylindrical section (12) having a diameter $D_{max}$, a central channel (18) and an outer channel (20) coaxially surrounding the central channel (18),
   - an outlet (24) having a diameter $D_A$ and
   - a second section (14) which tapers in the direction of the outlet (24) and comprises a hollow volume (15), into which the channels (18, 20, 22) open, wherein

   the second section (14) has, in cross section along a longitudinal axis $A_L$ of the device (10), a profile (28) of an outer wall delimiting the hollow volume (15) which is described by two radii R1 and R2 which go tangentially over into one another, wherein a profile subsection described by R1 adjoins the outlet (24) and a profile subsection described by R2 adjoins a wall (21) of the outer channel (20), which wall runs straight in the profile, and wherein $0.2 < R1/D_A < 4.0$ and $0.3 < R2/D_A < 5.0$.

2. Device according to Claim 1, **characterized in that** $0.8 < R1/D_A < 2.0$ and $1.0 < R2/D_A < 3.0$.

3. Device according to Claim 1 or 2, **characterized in that** eight, preferably four, particularly preferably two, in particular one, intermediate channel(s) (22) which coaxially surround(s) the central channel (18) is/are arranged between the central channel (18) and the outer channel (20).

4. Device according to any of the preceding claims, **characterized in that** the channels (18, 20, 22) open into the second section (14) at least partially at the height of a point of inflection P of the radii R1 and R2 going tangentially over into one another.

5. Device according to any of the preceding claims, **characterized in that** the channels (18, 20, 22) have a constant or decreasing flow cross section up to the entry into the second section (14).

6. Device according to any of the preceding claims, **characterized in that** there is a ratio between a flow cross section $A_{outer}$ of the outer channel (20) and a flow cross section $A_A$ of the outlet (24) of $0.3 < A_{outer}/A_A < 20.0$, preferably $1.0 < A_{outer}/A_A < 10.0$, particularly preferably $2.0 < A_{outer}/A_A < 8.0$.

7. Device according to any of the preceding claims, **characterized in that** $1 < D_{max}/D_A < 8$, preferably $1.5 < D_{max}/D_A < 6$, particularly preferably $2 < D_{max}/D_A < 5$.

8. Device according to any of the preceding claims, **characterized in that** a third cylindrical section (16) having a length 1 of $0 < l/D_A < 100$, preferably $3 < l/D_A < 40$, particularly preferably $5 < l/D_A < 20$, is arranged downstream of the outlet (24).

9. Device according to any of the preceding claims, **characterized in that** a punching device (19) which can be moved along the axis $A_L$ for removing deposits is arranged in the central channel (18).

10. Method for hydrolysing at least one compound, wherein water is conveyed at least through the outer channel (20) and the compound to be hydrolysed is conveyed through the central channel (18) and/or through at least one intermediate channel (22) by means of a device (10) according to any of Claims 1 to 9 and are at least partially mixed with one another in the second section (14), where the compound and the water are present as liquid.

11. Method according to Claim 10, **characterized in that** a channel conveying the compound is flanked at least by a channel conveying water.

12. Method according to either Claim 10 or 11, **characterized in that** channels conveying the compound and channels conveying water are arranged in an alternating order.

13. Method according to any of Claims 10 to 12, **characterized in that** the absolute value of a difference between $V_V$ and $V_{H2O}$ for two adjacent channels of which one conveys the compound at an average exit velocity $V_V$ and one conveys water at an average exit velocity $V_{H2O}$ is
    $0\ m/s < |V_V - V_{H2O}| < 200\ m/s$, preferably
    $2\ m/s < |V_V - V_{H2O}| < 100\ m/s$, particularly preferably
    $5\ m/s < |V_V - V_{H2O}| < 50\ m/s$.

14. Method according to any of Claims 10 to 13, **characterized in that** water leaves the outer channel (20) at an average exit velocity $V_{outer}$ of more than 0.5 m/s, preferably more than 2 m/s, particularly preferably more than 4 m/s.

15. Method according to any of Claims 10 to 14, **characterized in that** a channel conveying the compound has a mass flow $\dot{m}_V$ and a channel conveying water has a mass flow $\dot{m}_{H2O}$, where a ratio of the sum of the mass flows $\sum\dot{m}_{Vi}$ of all channels conveying the compound and the sum of the mass flows $\sum\dot{m}_{H2Oj}$ of all channels conveying water is $0 < \sum\dot{m}_{Vi}/\sum\dot{m}_{H2oj} < 1.0$, preferably $0 < \sum\dot{m}_{Vi}/\sum\dot{m}_{H2oj} < 0.5$, particularly preferably $0 < \sum\dot{m}_{Vi}/\sum\dot{m}_{H2oj} < 0.2$.

**Revendications**

1. Dispositif (10) pour l'hydrolyse d'au moins un composé, comprenant :

   - une première portion cylindrique (12) de diamètre $D_{max}$, un canal central (18) et un canal extérieur (20) entourant coaxialement le canal central (18),
   - une sortie (24) de diamètre $D_A$ et
   - une deuxième portion (14) se rétrécissant vers la sortie (24), comprenant un volume creux (15) dans lequel débouchent les canaux (18, 20, 22), la deuxième portion (14) présentant en section transversale le long d'un axe longitudinal $A_L$ du dispositif (10) un profil (28) d'une paroi extérieure limitant le volume creux (15), qui est décrit par deux rayons R1 et R2 se prolongeant tangentiellement l'un dans l'autre, une partie partielle du profil décrite par R1 se raccordant à la sortie (24) et une partie partielle du profil décrite par R2 se raccordant à une paroi (21) du canal extérieur (20), s'étendant en ligne droite dans le profil, et $0,2 < R1/D_A < 4,0$, et $0,3 < R2/D_A < 5,0$.

2. Dispositif selon la revendication 1, **caractérisé en ce que** $0,8 < R1/D_A < 2,0$, et $1,0 < R2/D_A < 3,0$.

3. Dispositif selon la revendication 1 ou 2, **caractérisé en ce qu'**entre le canal central (18) et le canal extérieur (20) sont disposés huit, de préférence quatre, particulièrement préférablement deux, en particulier un, canaux intermédiaires (22) entourant coaxialement le canal central (18).

4. Dispositif selon l'une quelconque des revendications précédentes, **caractérisé en ce que** les canaux (18, 20, 22) débouchent dans la deuxième portion (14) au moins en partie à la hauteur d'un sommet P des rayons R1 et R2 se prolongeant tangentiellement l'un dans l'autre.

5. Dispositif selon l'une quelconque des revendications précédentes, **caractérisé en ce que** les canaux (18, 20, 22) présentent une section transversale d'écoulement constante ou diminuant jusqu'à l'embouchure dans la deuxième portion (14).

6. Dispositif selon l'une quelconque des revendications précédentes, **caractérisé en ce qu'**entre une section transversale d'écoulement $A_{außen}$ du canal extérieur (20) et une section transversale d'écoulement $A_A$ de la sortie (24) il existe un rapport de $0,3 < A_{außen}/A_A < 20,0$, de préférence de $1,0 < A_{außen}/A_A < 10,0$, particulièrement préférablement de $2,0 < A_{außen}/A_A < 8,0$.

7. Dispositif selon l'une quelconque des revendications précédentes, **caractérisé en ce que** $1 < D_{max}/D_A < 8$, de préférence $1,5 < D_{max}/D_A < 6$, particulièrement préférablement $2 < D_{max}/D_A < 5$.

8. Dispositif selon l'une quelconque des revendications précédentes, **caractérisé en ce qu'**une troisième portion cylindrique (16) de longueur l de $0 < l/D_A < 100$, de préférence de $3 < l/D_a < 40$, particulièrement préférablement de $5 < l/D_a < 20$ est placée en aval de la sortie (24).

9. Dispositif selon l'une quelconque des revendications précédentes, **caractérisé en ce que** dans le canal central (18) est disposé un dispositif de perçage (19) déplaçable le long de l'axe $A_L$, pour enlever les dépôts.

10. Procédé pour l'hydrolyse d'au moins un composé, dans lequel, au moyen d'un dispositif (10) selon l'une quelconque des revendications 1 à 9, de l'eau est guidée au moins à travers le canal extérieur (20) et le composé à hydrolyser est guidé à travers le canal central (18) et/ou à travers au moins un canal intermédiaire (22) et ils sont mélangés dans la deuxième portion (14) au moins en partie l'un avec l'autre, le composé et l'eau se présentant sous forme de liquide.

11. Procédé selon la revendication 10, **caractérisé en ce qu'**un canal guidant le composé est bordé au moins par un canal conduisant de l'eau.

12. Procédé selon l'une quelconque des revendications 10 et 11, **caractérisé en ce que** des canaux conduisant le composé et des canaux conduisant l'eau sont disposés en succession alternée.

13. Procédé selon l'une quelconque des revendications 10 à 12, **caractérisé en ce que** pour deux canaux adjacents dont l'un conduit le composé à une vitesse de sortie moyenne $V_V$ et l'un conduit de l'eau à une vitesse de sortie moyenne $V_{H2O}$, la valeur absolue d'une différence entre $V_V$ et $V_{H2O}$ est $0 \text{ m/s} < |V_V - V_{H2O}| < 200 \text{ m/s}$, de préférence $2 \text{ m/s} < |V_V - V_{H2O}| < 100 \text{ m/s}$, particulièrement préférablement $5 \text{ m/s} < |V_V - V_{H2O}| < 50 \text{ m/s}$.

14. Procédé selon l'une quelconque des revendications 10 à 13, **caractérisé en ce que** l'eau quitte le canal extérieur (20) avec une vitesse de sortie moyenne $V_{außen}$ supérieure à 0,5 m/s, de préférence supérieure à 2 m/s, particulièrement préférablement supérieure à 4 m/s.

15. Procédé selon l'une quelconque des revendications 10 à 14, **caractérisé en ce qu'**un canal conduisant le composé présente un débit massique $\dot{m}_V$ et un canal conduisant de l'eau présente un débit massi-

que $\dot{m}_{H2O}$, un rapport de la somme des débits massiques $\sum \dot{m}_{Vi}$ de tous les canaux conduisant le composé et de la somme des débits massiques $\sum \dot{m}_{H2Oj}$ de tous les canaux conduisant de l'eau est de $0 < \sum \dot{m}_{Vi}/\sum \dot{m}_{H2Oj} < 1{,}0$, de préférence de $0 < \sum \dot{m}_{Vi}/\sum \dot{m}_{H2Oj} < 0{,}5$, particulièrement préférablement de $0 < \sum \dot{m}_{Vi}/\sum \dot{m}_{H2Oj} < 0{,}2$.

Fig. 1

Fig. 2

Fig. 3

**IN DER BESCHREIBUNG AUFGEFÜHRTE DOKUMENTE**

**In der Beschreibung aufgeführte Patentdokumente**

- DE 2820617 A1

- WO 2009037923 A1